Europäisches Patentamt

European Patent Office

Office européen des brevets

(19)

(11) Veröffentlichungsnummer: **0 012 940**
**B1**

(12) **EUROPÄISCHE PATENTSCHRIFT**

(45) Veröffentlichungstag der Patentschrift: **19.05.82**

(51) Int. Cl.³: **B 62 D 27/04**

(21) Anmeldenummer: **79105123.8**

(22) Anmeldetag: **13.12.79**

(54) **Geräuschmindernder Verband aus einem Fahrzeugrahmen und Karosserieteilen sowie Verfahren zu dessen Herstellung.**

(30) Priorität: **21.12.78 DE 2855380**

(43) Veröffentlichungstag der Anmeldung:
**09.07.80 Patentblatt 80/14**

(45) Bekanntmachung des Hinweises auf die Patenterteilung:
**19.05.82 Patentblatt 82/20**

(84) Benannte Vertragsstaaten:
**AT FR GB IT SE**

(56) Entgegenhaltungen:
DE - C - 498 781
DE - C - 518 997
FR - A - 2 410 592
GB - A - 229 543
GB - A - 400 048
GB - A - 643 074
GB - A - 677 938
GB - A - 786 786
GB - A - 1 117 538
GB - A - 1 293 339
GB - A - 2 011 326
DE - B - 1 286 918

(73) Patentinhaber: **M.A.N. MASCHINENFABRIK AUGSBURG-NÜRNBERG Aktiengesellschaft Dachauer Strasse 667 Postfach 50 06 20 D-8000 München 50 (DE)**

(72) Erfinder: **Drewitz, Hans-Jürgen Agnesstrasse 59 D-8000 München 40 (DE)**
Erfinder: **Stiglmaier, Manfred Am Grübel 7a D-8031 Gilching (DE)**
Erfinder: **Hörmann, Rudolf D-8061 Pullhausen 42 bei Dachau (DE)**

(56) Entgegenhaltungen:
GB - A - 1 414 394
GB - A - 1 415 072
GB - A - 1 491 547
GB - A - 1 493 539
US - A - 2 455 926

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Geräuschmindernder Verband aus einem Fahrzeugrahmen und Karosserieteilen sowie Verfahren zu dessen Herstellung

Die Erfindung bezieht sich auf einen Verband aus einem Fahrzeugrahmen und Karosserieteilen, insbesondere Bodenplatten, wobei zwischen den Rädern der Karosserieteile und dem Fahrzeugrahmen ein Profil aus Gummi oder ähnlichem elastischem Material eingesetzt ist.

Die Befestigung von Fußbodenplatten am Fahrzeugrahmen erfolgt bei bekannten Omnibussen in der Weise, daß die Fußbodenplatten entlang ihrer Ränder unmittelbar auf den Fahrzeugrahmen mit Hilfe von die Platten durchdringenden Metallschrauben aufgeschraubt werden. Eine plastische Zwischenschicht von etwa 1 bis 2 mm Stärke dient dabei als Dichtungsmaterial zwischen dem Metallfahrzeugrahmen und den Fußbodenplatten, die üblicherweise aus Holz bestehen (siehe DE—PS 518 997). — Es ist auch eine Doppelwand für Omnibusse bekannt (DE—AS 12 86 918) bei der Verkleidungsplatten unter Zwischenfügung eines elastischen Profils an der Blechkarosserie befestigt sind.

Es hat sich nun gezeigt, daß der Fußboden insbesondere eines Omnibusses als schallabstrahlende Membrane wirkt, die erhebliche Schallenergie in den Fahrgastraum des Omnibusses strahlt. Die vorherrschenden Schwingungen des Rahmens liegen dabei zwischen 300 und 4000 Hz, wobei die Eigengrundschwingung solcher aus Metallstäben gebildeter Fahrzeugrahmen etwa im Bereich von 500 Hz liegt. Schwingungserreger sind vor allem die angetriebene Fahrzeugachse mit ihren Getrieben sowie der Antriebsstrang zwischen Motor und Hinterachse, der im Fahrzeugrahmen gelagert ist. Eingeleitet werden die Schwingungen in den Rahmen durch die Achsanlenkungen am Rahmen sowie durch Rohrleitungen, Regler, Behälter und andere Aggregate, die mehr oder weniger direkt am Rahmen befestigt sind.

Da die Schwingungen im Bereich von 300 bis 4000 Hz auf den Menschen besonders störend wirken, ist versucht worden, die Schallabstrahlung der Fußbodenplatten, insbesondere in Omnibussen dadurch zu verringern, daß Zusatzmassen an den Fußbodenplatten angebracht wurden, die das Schwingungssystem verstimmen sollten. Diese Methode der Verringerung der Schallabstrahlung ist jedoch einerseits aufwendig, andererseits führt sie nur teilweise zu einer Verringerung der Schallabstrahlung.

Aufgabe der Erfindung ist es deshalb, eine Befestigung von Karosserieteilen, insbesondere Bodenplatten, an einem Fahrzeugrahmen zu schaffen, mit deren Hilfe die Schallabstrahlung von den Karosserieteilen bzw. Bodenplatten weitgehend unterdrückt wird, wobei die Befestigung, was den Herstellungsaufwand anlangt, so einfach gestaltet sein soll, daß sie für die Großserienherstellung anwendbar ist.

Zur Lösung dieser Aufgabe wird ein Verband mit den Merkmalen, wie sie im Kennzeichnungsteil des Anspruchs 1 aufgeführt sind, vorgeschlagen.

Bei einer solcherart ausbebildeten Befestigung besteht keine Körperschallbrücke mehr zwischen dem Metallrahmen und den Karosserieteilen bzw. den Bodenplatten. Dadurch wird die Übertragung von Schallenergie vom Rahmen auf die Bodenplatten und damit deren Schallabstrahlung erheblich eingeschränkt. Gleichzeitig kann durch die Absenkung der Eigenfrequenz der aus Karosserieteil und Profil bestehenden Unterverbände mit Sicherheit eine Resonanz mit dem Fahrzeugrahmen vermieden werden. Der erfindungsgemäße Verband hat jedoch nicht nur Vorteile auf dem Gebiet der Schalldämpfung, sondern ergibt gleichzeitig einen verbesserten Schutz gegen Korrosion der Fußbodenplatten an ihren Außenkanten. Schließlich ist eine besonders einfache Montage der Karosserieteile bzw. Bodenplatten hervorzuheben, u. a. deshalb, weil die Montagetoleranzen größergehalten werden können.

In vorteilhafter Ausgestaltung der Erfindung soll das Profil in seiner Geometrie und im Material so auf das bzw. die Karosserieteil(e) abgestimmt sein, daß der Verband aus Karosserieteil und Profil eine Eigenfrequenz aufweist, die unter 300 Hz liegt, ein Wert, der mit Sicherheit deutlich unterhalb der Eigenfrequenz von Fahrzeugrahmen in verschiedener Ausführung liegt. Eine besonders vorteilhafte Abstimmung erfolgt in der Weise, daß die Eigenfrequenz des Verbandes aus Karosserieteil und Profil zwischen 130 und 180 Hz liegt.

Diese niedrige Eigenfrequenz des Verbandes aus Karosserieteil und Profil wird durch die Ausbildung und Anordnung des Profils nach den Merkmalen der Ansprüche 4 bis 7 alternativ oder additiv erreicht.

Eine Weiterbildung erfährt die Erfindung dadurch, daß das Profil im wesentlichen aus einer Mischung eines Klebers und eines elastischen Füllmittels bestehen soll.

Im weiteren bezieht sich die Erfindung auf ein Verfahren zur Herstellung eines Verbandes aus einem Fahrzeugrahmen und Karosserieteilen, insbesondere Bodenplatten, wie er vorstehend beschrieben wurde und soll dadurch gekennzeichnet sein, daß eine Mischung aus einem Kleber und einem elastischen Füllmittel auf die zur Befestigung der Karosserieteile vorgesehene Oberfläche aufgetragen wird, danach die Karosserieteile auf die Schicht aufgelegt werden und die Fugen zwischen den Karosserieteilen mit der Mischung ausgefüllt werden.

Die Herstellung eines Verbandes nach diesem Verfahren hat vor allem herstellungstechnische Vorteile, indem nicht erst auf den Rahmen eine Kleberschicht aufgetragen werden muß, dann das Profil aufgeklebt werden muß und danach die Karosserieteile in das Profil eingeklebt werden müssen, sondern indem lediglich eine plastische Schicht, die gleichzeitig Kleber und Profilmaterial ist, auf den Rahmen aufgetragen wird und die Karosserieteile auf diese Schicht aufgelegt werden. Ein weiterer Vorteil dieses Verfahrens besteht darin, daß die Schichtstärke in weiten Grenzen der Materialbeschaffenheit der Karosserieteile angepaßt werden kann, was zur Herbeiführung einer gewünschten niedrigen Eigenfrequenz des fertigen Unterverbandes aus Karosserieteil und Profil von besonderem Vorteil ist.

Ausführungsbeispiele von erfindungsgemäßen Verbänden werden anhand der beigefügten Zeichnungen näher erläutert.

In den Zeichnungen zeigt

Fig. 1 einen Querschnitt durch eine Befestigung von Bodenplatten des Fußbodens in einem Omnibus an einem Rahmenträger,

Fig. 2 eine weitere Ausführungsform einer Befestigung gemäß Fig. 1.

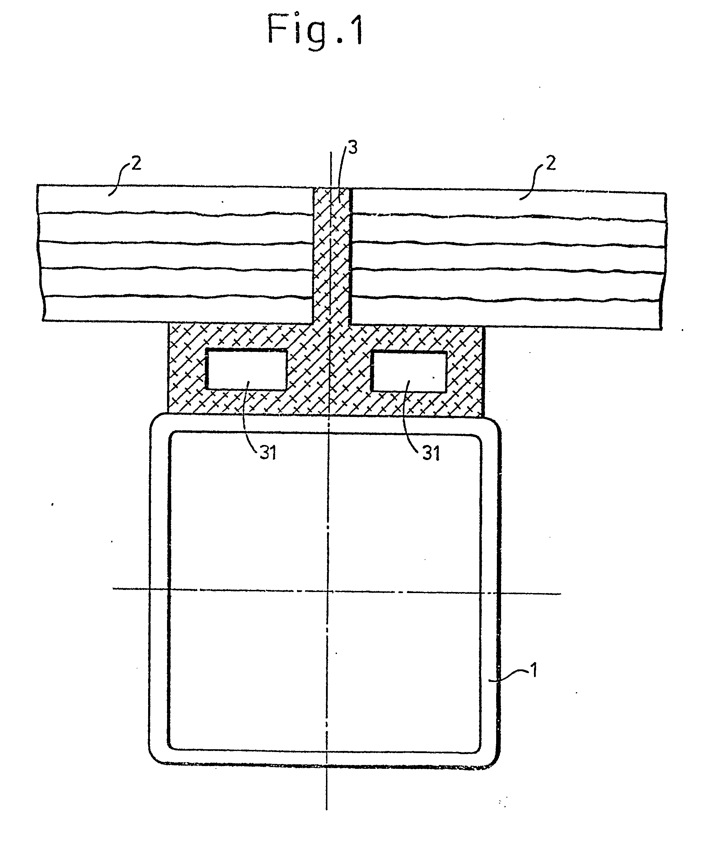

Gemäß Fig. 1 soll ein als Vierkantstahlrohr ausgebildeter Rahmenträger 1 Teil eines nicht näher dargestellten Fachwerkbodenrahmens eines Omnibusses sein. Ein auf diesem Fachwerkbodenrahmen abgestützter Fußboden besteht im wesentlichen aus Bodenplatten 2, die im dargestellten Ausführungsbeispiel als Holzplatten ausgeführt sind. Die Befestigung dieser Bodenplatten 2 auf dem Rahmenträger 1 erfolgt nicht unmittelbar sondern in der Weise, daß die Bodenplatten 2 entlang ihrer Ränder in einem T-Profil 3 aus Gummi liegen und mit diesem verklebt sind. Das T-Profil 3 seinerseits ist mit dem T-Querstück am Rahmenträger 1 verklebt. Um eine möglichst weitgehende Entkopplung der Bodenplatten 2 von dem schwingungserregenden Bodenrahmen mit dem Rahmenträger 1 zu erhalten, ist das Profil 3 so ausgelegt, daß die Resonanzfrequenz des befestigten Verbandes Bodenplatte einschließlich Profil 3 in einem Bereich zwischen 130 und 180 Hz liegt. Hierzu ist das auf dem Rahmenträger 1 aufliegende T-Querstück des Profils 3 im Querschnitt mit rechteckigen Kammern 31 versehen, die über die gesamte Länge des Profils 3 durchlaufen. Durch diese Kammer sowie durch eine geringe Shorehärte des Profilmaterials von etwa 45 Härtegraden wird das Profil in der gewünschten Weise weich gehalten, um die Übertragung von Körperschall vom Rahmenträger 1 auf die Fußbodenplatten zu verhindern. Die Kammern 31 können auch von anderem als rechteckigem Querschnitt sein.

An den von senkrechten Karosseriewänden begranzten Rändern des Fußbodens wird ein Profil 3 verwendet, das auf einer Seite eine durchlaufende senkrechte Abschlußkante bildet, d. h. ein L-Profil.

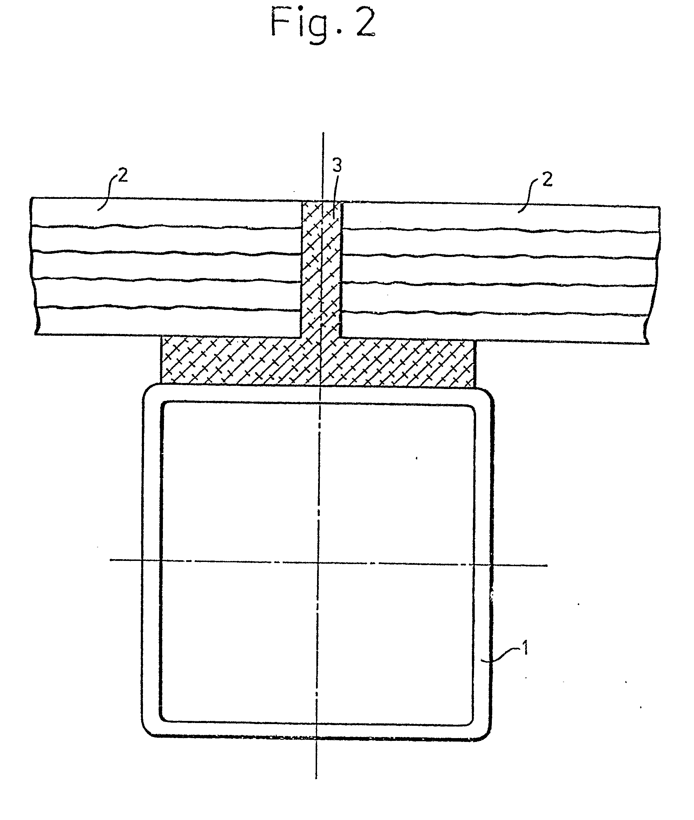

Das Ausführungsbeispiel gemäß Fig. 2 gleicht, was die Form des Profils 3 anlangt, dem Ausführungsbeispiel nach Fig. 1. Es fehlen gegenüber dem Ausführungsbeispiel nach Fig. 1 lediglich die Kammern 31 im Profil 3. Das Ausführungsbeispiel gemäß Fig. 2 veranschaulicht das erfindungsgemäße Verfahren zur Erstellung eines solchen Verbandes. Danach wird eine Mischung aus einem Epoxidharzkleber und einem elastischen Füllmittel vorzugsweise aus Gummischnitzeln in gewünschter Schichtstärke auf die Oberseite des Fahrzeugrahmens (im vorliegenden Fall des Rahmenträgers 1) aufgebracht. Danach werden die Bodenplatten 2 mit ihren Rändern auf dieses noch plastische Material aufgelegt, wobei sich das Material der Randkontur der Bodenplatten 2 anformt. Soweit das plastische Material nicht in die Fuge zwischen zwei angrenzenden Bodenplatten von selbst hochsteigt, wird von oben noch Material zugegeben, um die Fugen, wie dargestellt, vollständig bis zur Oberkante der Bodenplatten auszufüllen. Danach läßt man das Profilmaterial abbinden bzw. aushärten, was bei gegenüber der Normaltemperatur etwas erhöhter Temperatur erfolgen kann. Das Verhältnis der Menge von elastischem Füllmittel, im vorliegenden Fall also Gummischnitzel, zur Menge des Epoxidharzklebers richtet sich danach, wie weich das entstehende Profil sein soll. Je mehr Gummischnitzel eingemischt werden, desto weicher ist das Profil und desto niedriger liegt die Eigenfrequenz des aus Bodenplatte 2 und Profil 3 gebildeten Unterverbands. Auch die Schichtstärke des zu erzeugenden Profils kann bei dem erfindungsgemäßen Verfahren in Grenzen gewählt werden, wobei eine große Schichtstärke eine starke Absenkung der Eigenfrequenz des Unterverbands ergibt.

**Patentansprüche**

1. Verband aus einem Fahrzeugrahmen (1) und Karosserieteilen (2), insbesondere Bodenplatten, wobei zwischen den Rändern der Karosserieteile (2) und dem Fahrzeugrahmen (1) ein Profil (3) aus Gummi oder ähnlichem elastischem Material eingesetzt ist, dadurch gekennzeichnet, daß der aus Karosserieteil (2) und Profil (3) innerhalb des Verbandes gebildete Unterverband eine Eigenfrequenz aufweist, die niedriger liegt als die Eigenfrequenz des Fahrzeugrahmens (1) und daß jeweils die Karosserieteile (2) nur mit dem Profil (3) und nur das Profil (3) mit dem Fahrzeugrahmen (1) verbunden sind.

2. Verband nach Anspruch 1, dadurch gekennzeichnet, daß das Profil (3) in seiner Geometrie und im Material so auf das bzw. die Karosserieteil(e) (2) abgestimmt ist, daß der Unterverband aus Karosserieteil und Profil eine Eigenfrequenz aufweist, die unter 300 Hz liegt.

3. Verband nach Anspruch 2, dadurch gekennzeichnet, daß das Profil (3) in seiner Geometrie und im Material so auf das bzw. die Karosserieteil(e) (2) abgestimmt ist, daß der Verband aus Karosserieteil (2) und Profil (3) eine Eigenfrequenz aufweist, die zwischen 130 und 180 Hz liegt.

4. Verband nach einem der Ansprüche 1 bis 3, dadurch gekennzeichnet, daß das Profil (3) im Querschnitt Kammern (31) aufweist, die über die Länge des Profils (3) durchlaufen.

5. Verband nach einem oder mehreren der Ansprüche 1 bis 4, dadurch gekennzeichnet, daß das Material, aus dem das Profil (3) besteht, eine Shorehärte von etwa 45 aufweist.

6. Verband nach einem oder mehreren der vorhergehenden Ansprüche, dadurch gekennzeichnet, daß das Profil (3) T-Querschnitt aufweist, wobei das T-Querstück satt auf dem Fahrzeugrahmen (1) aufliegt und der T-Steg in die Fuge zwischen zwei angrenzenden Karosserieteilen (2) hineinragt.

7. Verband nach einem oder mehreren der vorhergehenden Ansprüche, dadurch gekennzeichnet, daß das Profil mit dem Fahrzeugrahmen verklebt ist.

8. Verband nach einem oder mehreren der vorhergehenden Ansprüche, dadurch gekennzeichnet, daß das Profil (3) im wesentlichen aus einer Mischung eines Klebers, vorzugsweise eines Epoxidharzklebers, und eines elastischen Füllmittels, vorzugsweise Gummischnitzel, besteht.

9. Verfahren zur Herstellung eines Verbandes aus einem Fahrzeugrahmen (1) und Karosserieteilen (2), insbesondere Bodenplatten, nach Anspruch 8, dadurch gekennzeichnet, daß die Mischung aus dem Kleber und dem elastischen Füllmittel auf die zur Befestigung der Karosserieteile (2) vorgesehene Oberfläche des Fahrzeugrahmens (1) aufgetragen wird, danach die Karosserieteile (2) auf die Schicht aufgelegt werden und die Fugen zwischen den Karosserieteilen (2) mit der Mischung ausgefüllt werden.

10. Verfahren nach Anspruch 9, dadurch gekennzeichnet, daß die Mischung aus Kleber und Füllmittel je nach Materialbeschaffenheit der Karosserieteile (2) in einer solchen Schichtstärke aufgetragen wird, daß die Eigenfrequenz des Unterverbandes Karosserieteil (2) — ausgehärtetes Profil (3) geringer ist als die Eigenfrequenz des Fahrzeugrahmens (1).

## Claims

1. An assembly consisting of a vehicle chassis (1) and body parts (2), more particularly floor panels, a profile (3) of rubber or similar elastic material being inserted between the edges of the body parts (2) and the chassis (1), characterised in that the sub-assembly formed by the body part (2) and the profile (3) within the assembly has a natural frequency lower than the natural frequency of the chassis (1) and the body parts (2) are connected only to the profile (3) and only the profile (3) is connected to the chassis (1).

2. An assembly according to claim 1, characterised in that the geometry and material of the profile (3) are so adapted to the body part or parts (2) that the sub-assembly consisting of the body part and the profile has a natural frequency below 300 Hz.

3. An assembly according to claim 2, characterised in that the geometry and material of the profile (3) are so adapted to the body part or parts (2) that the assembly consisting of the body part (2) and the profile (3) has a natural frequency of between 130 and 180 Hz.

4. An assembly according to any one of claims 1 to 3, characterised in that the profile (3) has in cross-section chambers (31) extending continuously through the length of the profile (3).

5. An assembly according to one or more of claims 1 to 4, characterised in that the material of which the profile (3) consists has a Shore hardness of about 45.

6. An assembly according to one or more of the preceding claims, characterised in that the profile (3) has a T cross-section, the crossmember of the T resting snugly on the chassis (1) and the web of the T projecting into the joint between two adjacent body parts (2).

7. An assembly according to one or more of the preceding claims, characterised in that the profile is stuck to the vehicle frame.

8. An assembly according to one or more of the preceding claims, characterised in that the profile (3) consists essentially of a mixture of an adhesive, preferably an epoxy resin adhesive, and an elastic filler, preferably rubber shavings.

9. A method of producing an assembly consisting of a chassis (1) and body parts (2), more particularly floor panels, according to claim 8, characterised in that the mixture consisting of the adhesive and the elastic filler is applied to that surface of the chassis (1) which is intended for fixing of the body parts (2) whereupon the latter are placed on the coating and the joints between the body parts (2) are filled with the mixture.

10. A method according to claim 9, characterised in that the mixture of adhesive and filler is applied in such coating thickness depending upon the nature of the material of the body parts (2) that the natural frequency of the sub-assembly consisting of the body parts (2) and the hardened profile (3) is less than the natural frequency of the sub-assembly consisting of the body parts (2) and the hardened profile (3) is less than the natural frequency of the chassis (1).

## Revendications

1. Assemblage d'un châssis de véhicule (1) et d'éléments de carrosserie (2), notamment de plaques de plancher, un profilé (3) en caoutchouc ou en matière élastique similaire étant inséré entre les bords des éléments de carrosserie (2) et le châssis de véhicule (1), caractérisé en ce que le sous-assemblage formé à l'intérieur de l'assemblage par l'élément de carrosserie (2) et le profilé (3) présente une fréquence propre qui est inférieure à la fréquence propre du châssis du véhicule (1) et en ce que, respectivement les éléments de carrosserie (2) ne sont assemblés qu'avec le profilé (3) et le profilé (3) qu'avec le châssis de véhicule (1).

2. Assemblage selon revendication 1, caractérisé en ce que le profilé (3) est, dans sa géometrie et sa matière, accordé à l'élément ou aux éléments de carrosserie (2), de manière que le sous-assemblage formé par l'élément de carrosserie et le profile présente une fréquence propre qui est inférieure à 300 Hz.

3. Assemblage selon revendication 2, caractérisé en ce que le profilé (3) est, dans sa géométrie et sa matière, accordé à l'élément ou aux éléments de carrosserie (2), de manière que l'assemblage formé par l'élément de carrosserie (2) et le profilé (3) présente une fréquence propre qui est située entre 130 et 180 Hz.

4. Assemblage selon l'une des revendications 1 à 3, caractérisé en ce que le profilé (3) présente dans sa section transversale des chambres (31) qui s'étendent sur la longueur du profilé (3).

5. Assemblage selon l'une ou plusieurs des revendications 1 à 4, caractérisé en ce que la matière dont est constitué le profilé (3) présente une dureté Shore de 45 environ.

6. Assemblage selon l'une ou plusieurs des revendications précédentes, caractérisé en ce que le profilé (3) présente une section transversale en T, la traverse du T reposant à plat sur le châssis de véhicule (1) et la jambe de T pénétrant dans le joint entre deux éléments de carrosserie adjacents (2).

7. Assemblage selon l'une ou plusieurs des revendications précédentes, caractérisé en ce que le profilé est collé avec le châssis de véhicule.

8. Assemblage selon une ou plusieurs des revendications précédentes, caractérisé en ce que le profilé (3) est essentiellement constitué par un mélange d'un adhésif, de préférence d'un adhésif à résine époxy, et d'un produit de remplissage élastique, de préférence des rognures de caoutchouc.

9. Procédé pour réaliser un assemblage d'un châssis de véhicule (1) et d'éléments de carrosserie (2), notamment de plaques de plancher, selon revendication 8, caractérisé en ce que le mélange d'adhésif et de produit de remplissage élastique est déposé sur la surface du châssis de véhicule (1) prévue pour la fixation des éléments de carrosserie (2), les éléments de carrosserie (2) sont ensuite posés sur la couche et les joints entre les éléments de carrosserie (2) sont remplis avec le mélange.

10. Procédé selon revendication 9, caractérisé en ce que le mélange d'adhésif et de produit de remplissage est, suivant la nature de la matière des éléments de carrosserie (2), déposée suivant une épaisseur de couche telle que la fréquence propre du sous-assemblage éléments de carrosserie (2)-profilé durci (3) soit inférieure à la fréquence propre du châssis de véhicule (1).

0 012 940

Fig.1

1

# Fig. 2